# EUROPEAN PATENT SPECIFICATION

(11) **EP 3 771 066 B1**
(45) Date of publication and mention of the grant of the patent: **21.06.2023**
(21) Application number: 19188387.5
(22) Date of filing: 25.07.2019
(51) Int. Cl.: H02J 7/00

(54) **BATTERY SYSTEM**
BATTERIESYSTEM
SYSTÈME DE BATTERIE

(43) Date of publication of application: 27.01.2021
(73) Proprietor: Samsung SDI Co., Ltd., Gyeonggi-do 17084 (KR)
(72) Inventor: Hochgatterer, Nikolaus, 8041 Graz (AT); Hofer, Maximilian, 8230 Hartberg (AT); Kim, Myungchul, Gyeonggi-do 17084 (KR); Yoo, Kwangmin, Gyeonggi-do 17084 (KR); Seo, Sangchul, Gyeonggi-do 17084 (KR); Yang, Jeongmo, Gyeonggi-do 17084 (KR); Kim, Sunmin, Gyeonggi-do 17084 (KR); Kim, Dolores, Gyeonggi-do 17084 (KR); Min, Byeongseon, Gyeonggi-do 17084 (KR); Kim, Pyungkap, Gyeonggi-do 17084 (KR)
(74) Representative: Gulde & Partner

(56) References cited:
- EP-A1- 2 782 201
- CN-B- 105 656 122
- US-A1- 2018 337 550
- US-B1- 9 680 333

## Description

### Field of the Invention

The present invention relates to a battery system, particularly a battery system with improved redundancy for fulfilling high safety standards. The battery system comprises a control unit configured for controlling at least a power switch (shut-off relay) of the battery system and having a first microcontroller and a DCDC converter having a second microcontroller. The control unit can redundantly control the DCDC converter, while still fulfilling its own task. The invention further relates to a control unit and a DCDC converter for such a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises a battery management unit (BMU), a battery management system (BMS), and/or a battery system manager (BSM). Each of these control units may be realized as an integrated circuit (IC), a microcontroller (µC), an application specific integrated circuit (ASIC), or the like. Control units may be an integral part of the battery system and disposed within a common housing or may be part of a remote control module communicating with the battery system via a suitable communication bus. In both cases, the control unit communicates with the electrical consumers via a suitable communication bus, e.g. a CAN or SPI interface.

The electric engine of electric vehicles may be supplied by a high voltage battery system, e.g. a 48 V battery system. The 48 V battery system is connected to a 48 V board net that may comprise electronic control units (ECUs) powered by the 48 V battery system. The 48 V battery system is usually charged by a electric generator (combined starter generator). The electric vehicles may further comprise a 12 V board net that might be related to security relevant functions. Exemplarily, an ECU of a power steering system or antiskid system may be integrated in the 12 V board net. The 12 V board net may comprise a 12 V battery system, e.g. a lead-acid based battery, which may be charged by the starter generator via a DC/DC.

Hence an electric vehicle according to the prior art usually comprises a 12 V battery system, a DC/DC converter and a 48 V battery system. As these electrical systems gain more importance in the operation of such vehicle, the availability of the components of the electric system becomes more important. Exemplarily, it shall be ensured that even if a failure occurs, e.g., in the high voltage battery system or the DCDC converter, a user should be able to operate the vehicle with limited functionality. Further, the security relevant functions as already set forth above have to met specific availability standards, such as e.g., ASIL B.

Most of the known solutions considering these availability requirements of the electric system mainly focus on the availability of the high voltage battery. However, the known solutions do not yet consider the functional safety of the DCDC converters under the availability aspect. EP 2 782 201 A1 discloses a power supply system comprising a storage battery unit and a charging-discharging unit, wherein the storage battery unit comprises a controller with a microprocessor that is configured to control a switch based on signals received from monitoring sections and indicative of a battery cell state or based on a signal received via communication section and indicative of a malfunction of charging/discharging unit.

It is thus an objective of the present invention, to provide a battery system with a DCDC converter having improved functional availability and preferably fulfils ASIL B. It is a further objective to provide a control unit and a DCDC converter fur such a battery system.

### Description of the Invention

The objective of the invention is solved and the disadvantages of the prior art are overcome or at least reduced by the subject-matter of the present invention, in particular by a control unit, a battery system and a DCDC converter according to the respective appended claims.

A first aspect of the present disclosure relates to a control unit for a battery system, wherein the control unit comprises at least one input node that is configured for receiving at least one sensor signal, which is indicative of a state of at least one of a plurality of battery cells of the battery system. In other words, the control unit is configured for monitoring the state of the battery system by monitoring at least some of its battery cells. The sensor(s) supplying the sensor signal(s) is (are) either part of the control unit or the battery system. The input node is configured for single-ended or differential input. Preferably, the sensor signal is a voltage signal and/or a current signal of at least one of the battery cells of the battery system.

The control unit further comprises a first microcontroller that is configured to generate a first control signal based on the state of the at least one battery cell. In other words, the first microcontroller is preferably connected to the at least one input node and is configured for generating a first control signal based on the sensor signal. The first control signal is preferably suitable for controlling a power switch, e.g. a relay, of the battery system in which the control unit is utilized. Preferably, the first control signal is suitable for setting the power switch either conductive or non-conductive, e.g. by taking one of two values. The first microcontroller is preferably configured to control the protection system of the battery system, e.g. an overcurrent protection. The sensor signal is then preferably a current signal.

The first microcontroller preferably is further configured to perform at least one control function with respect to the battery system. In the context of the present disclosure, the at least one control function preferably comprises measurements of cell voltages, cell currents, cell resistances or cell capacities. Further preferred, the control functions also comprise the active or passive balancing of cell voltages or cell currents of a plurality of battery cells. The control unit preferably comprises further means for detecting a voltage of at least one battery cell, and/or the means for balancing the voltages of a plurality of battery cells. Particularly preferred, the first microcontroller is configured as one of a battery management system, BMS, battery system manager, BSM, or cell supervision circuit, CSC as described above. Preferably, the control functions further relate to data communication with the CSCs of battery cells or battery submodules of the battery system and/or with connected electric consumers.

The first microcontroller of the invention further comprises a first communication interface that is configured to receive a second state signal. The first communication interface preferably is a data input pin of the first microcontroller. Further preferred, a data line as described in more detail below is connected to the first communication interface for providing the second state signal. The second state signal that can be received via the first communication interface is indicative of an operation state of a second microcontroller. In other words, the first microcontroller is configured to receive a second state signal indicative of whether a second microcontroller, preferably a second microcontroller of a DCDC converter, is operating normally or is in a fault state. The first microcontroller is also configured to process the signal.

The control unit of the present invention further comprises a switch control circuit that is configured for controlling the power switch of the battery system. Therefore, the control unit is configured for transmitting at least one switch control signal to the power switch. The switch control signal is preferably suitable for setting the power switch either conductive or non-conductive or, alternatively, for freely setting the conductivity of the power switch.

The switch control circuit is further configured for receiving the first control signal directly or indirectly from the first microcontroller. The switch control circuit is further configured to receive a signal indicative of the state of the at least one battery cell, e.g., the sensor signal received from the input node as described above. The switch control circuit is further configured to receive at least one state signal, particularly a first state signal, a second state signal and/or a combined state signal, which is/are indicative of an operation state of the first microcontroller and/or of an operation state of the second microcontroller. The switch control circuit operates based on these input signals as described in more detail in the following.

The switch control circuit is configured to generate a second control signal based on the signal indicative of the state of the at least one battery cell, e.g., based on the sensor signal received from the input node. Therein, the second control signal is suitable for controlling the power switch, e.g. a relay, of the battery system in which the control unit is utilized. Preferably, the second control signal is suitable for setting the power switch either conductive or non-conductive, e.g. by taking one of two values, or, alternatively, to freely set the conductivity of the power switch. In a simple embodiment, the second control signal is generated by comparing the received sensor signal to a predefined threshold value.

The switch control circuit is also configured to selectively transmit one of the first control signal and the second control signal to the power switch of the battery system, wherein the selection is made based on the at least one received state signal, i.e., based on an operation state of the first microcontroller and based on an operation state of the second microcontroller. The first state signal is preferably received from the first microcontroller. The second state signal is preferably received from the first microcontroller and/or via the communication interface from the second microcontroller. Alternatively, the first state signal and/or the second state signal is/are generated and/or received by an additional circuit component that is configured for monitoring the first and/or second microcontroller, such as e.g. a first system basis chip as it is commonly known to the person skilled in the art.

According to the present invention, the switch control circuit is configured to transmit one of the first control signal and the second control signal to the power switch based on the at least one received state signal, i.e., based on the operation states of the first and the second microcontroller. Therein, the switch control circuit is configured to control the power switch by transmitting either the first control signal or the second control signal, which are both suitable for setting the power switch either conductive or non-conductive. In other words, the switch control circuit of the present invention provides two core functionalities that are (a) generating a second control signal additionally to that generated by the first microcontroller and (b) multiplexing the first and second control signals based on the received state signals.

The control unit of the present invention advantageously provides a bypass to a microcontroller commonly used for controlling a power switch for emergency shut-down of a battery system. Therein, the availability of the battery system is improved by decreasing the FIT rate of the battery system, particularly of the protection system of the battery system, by providing an alternative signal path between a security relevant sensor value and a power switch. The control unit of the invention thus allows ASIL B classification of a battery system. Further, the control unit of the present invention allows to free capacity of the first microcontroller in cases, where a second microcontroller connected to the control unit is in a fault state, i.e., malfunctioning. If a second state signal indicating such a fault state is received, the control unit transfers the power switch control to the switch control circuit. Then, the first microcontroller can be used as a replacement for the second microcontroller.

In the control unit of the invention, the switch control circuit is preferably configured to transmit the first control signal to the power switch, if the at least one state signal is indicative of an operability of the first microcontroller and of the second microcontroller. In other words, during a normal mode of the first microcontroller without a failure occurring therein, the first microcontroller controls the power switch of the battery system. However, also the second microcontroller must be in a normal operation for that the first control signal is transmitted to the power switch from the switch control circuit. Hence, if both, the first and the second microcontroller operate normally, all functionalities and safety mechanisms, e.g. with respect to a plurality of different sensor values (temperature, current, voltage, gas composition), may be utilized for controlling the emergency shut down of the battery system via power switch.

In the control unit of the invention, the switch control circuit is further preferably configured to transmit the second control signal to the power switch, if the received at least one state signal is indicative of a malfunction of the first microcontroller or the second microcontroller. In other words, if a failure occurs in the first or the second microcontroller, the control of the power switch via the first microcontroller is stopped and the power switch becomes controlled by the switch control circuit. Hence, in a fault situation of the first microcontroller, e.g., determined based on the first state signal or the combined state signal, a reliable emergency shut down of the battery system can be guaranteed. Further, in a fault situation of the second microcontroller, e.g., based on the second state signal or the combined state signal, the functions of the second microcontroller can be taken over by the first microcontroller. Therefore, capacities of the first microcontroller are freed in that the power switch becomes controlled by the switch control circuit instead of the first microcontroller. In both cases, the control of the power switch via the switch control circuit may be based on less sensor signals.

Particularly preferred, the switch control circuit is configured as a hardware path. In other words, the switch control circuit does not comprise any programmable components of a certain complexity and/or integrated circuits, such as ASICs or MCUs, but consists solely of simple electronic hardware components, such as e.g. voltage dividers, transistors, resistors, capacitors, operational amplifiers and/or electronic hardware components with comparable functionality or formed of the aforementioned. Thus, the switch control circuit realizes fast reaction and switching times with high reliability. Particularly preferred, the switch control circuit has an FIT rate of 100 or less. Further preferred, the whole hardware path between the input nodes and an output node of the control unit connected to the power switch is configured as a hardware path with a FIT rate of 100 or less. The skilled person is aware of how to determine FIT rates of a hardware path based on FIT of its components.

In a further preferred embodiment of the control unit, the first microcontroller is configured to load the software of the second microcontroller, if the second state signal is indicative of a malfunction of the second microcontroller. Hence, the second state signal received via the first communication interface is also provided to the first microcontroller. On receiving the second state signal indicative of a fault of the second microcontroller, the first microcontroller loads software necessary for performing the operations usually carried out by the second microcontroller from an internal or external memory, preferably into an active memory (RAM).

Further preferred, the first microcontroller is configured to perform the functions of the second microcontroller, if the second state signal is indicative of a malfunction of the second microcontroller. In other words, once the first microcontroller detects a malfunction of the second microcontroller based on the second state signal, it loads the software of the second microcontroller and operates as if it would be the second microcontroller. Resources required for this operation have been freed by transferring power switch control to the switch control circuit. Performing the operations of the second microcontroller preferably comprises generating a first DCDC control signal, i.e., a signal suitable for controlling the DCDC converter, particularly at least one single phase DCDC converter of the DCDC converter, further preferred duty cycles of switching elements of the single phase DCDC converter or the like. Performing the operations of the second microcontroller preferably further comprises transmitting the generated first DCDC control signal to the DCDC converter, particularly via a second communication interface of the DCDC converter. Performing the operations of the second microcontroller may further comprise to receive required inputs for operating the DCDC converter, such as e.g., an input voltage value, a load demand signal, or the like.

In a preferred embodiment of the control unit of the invention, the first microcontroller is configured to generate a first state signal that is based on its own operation state. In other words, the first microcontroller performs a self-check operation, preferably regularly. The results of this self-check operation, i.e., operability or malfunction, are reflected in at least one value of the first state signal. Further preferred, the first microcontroller further bases the generated state signal on the received second state signal. Therein, the content of the second state signal, i.e., operability of malfunction of the second microcontroller, is reflected by at least one value of the generated state signal. Such a combined state signal may be the juxtaposition of the first and second state signal, i.e., with one value representing the first state signal and another value representing the other state signal. However, the first microcontroller may also generate a single value combined state signal based on the first and second state signal, e.g., taking a first value if both microcontrollers function normally and a second value if one of the microcontrollers is malfunctioning. In an alternatively preferred embodiment, the control unit of the present invention further comprises a first system basis chip configured to receive the first state signal and/or the second state signal.

Particularly preferred, the first system basis chip is configured for monitoring the first microcontroller and for generating the first state signal and for transmitting it to the switch control circuit. Particularly preferred, the first system basis chip is configured for generating a first state signal indicative of a malfunction of the first microcontroller in response to detecting a malfunction of the first microcontroller and for generating a first state signal indicative of an operability of the first microcontroller otherwise. Further preferred, the first system basis chip is configured for monitoring the second state signal and to forward it to the first microcontroller and/or the switch control circuit and/or to generate a combined state signal therefrom. Above that the first system basis chip may be configured to perform further functions, such as e.g. supervision functions, reset generators, watchdog functions, bus interface (LIN, CAN, etc.), wake-up logic, and/or power switches

Further preferred embodiment, the control unit further comprises a front end circuit, preferably an analog front end (AFE), that is connected to the input node and that is configured for generating a battery signal based on the sensor signal. In a simple embodiment, the battery signal is equal to one of the at least one sensor signal, which may be selected by a multiplexer. However, preferably the front end circuit comprises one or more of an analog amplifier, an operation amplifier, filters, and an analog to digital converter. Thus, the battery signal is preferably a processed signal, e.g. with improved S/N ratio, decreased disturbances, amplified with respect to a predefined reference voltage (baseline voltage), or already converted to a digital signal. The skilled person is aware of different front end circuits suitable for receiving different sensor signal inputs. If a front end circuit is part of the control unit, any sensor signal is replaced by the battery signal downstream the front end circuit.

According to another preferred embodiment, the control unit further comprises an amplification circuit that is interconnected between the front end circuit and the switch control circuit. Alternatively, the amplification circuit is interconnected between the at least one input node of the control unit and the switch control circuit. According to these embodiments, the switch control circuit is further configured to generate the second control signal based on the amplified sensor signal. These preferred embodiments advantageously allow utilizing the battery signal or the sensor signal directly for deriving the second control signal, without any further amplification necessary in the switch control circuit. Therein, amplifying the signal in the amplification circuit advantageously allows utilizing solely hardware components without any further programmable integrated circuits downstream the amplification circuit. If the sensor signals are amplified, this embodiment advantageously provides another bypass around the front end circuit, e.g. in a case where a failure of the microcontroller is due to a cause that also influences the front end circuit, such as e.g. electro-magnetic interference.

Another aspect of the invention relates to a battery system with the control unit as described above. The battery system of the invention comprises a battery cell stack that is configured for providing a first operation voltage to a first output node of the battery system. Particularly, the battery system comprises a plurality of battery cells, which are electrically connected in parallel and/or series between a first stack node and a second stack node. Therein, the first stack node is connected to the first output node of the battery system and the second stack node is connected to a third output node of the battery system. The battery system further comprises a power switch that is configured for selectively disconnecting the battery cell stack from the first output node. In other words, the power switch is interconnected between the first stack node and the first output node. The control unit according to the invention as described above is connected to the power switch for controlling its conductivity.

The battery system further comprises a DCDC converter that is configured to receive the first operation voltage as an input voltage, to perform a voltage conversion operation on the input voltage and to output a second operation voltage to a second output node of the battery system. The DCDC converter preferably comprises at least one single phase DCDC converter, preferably multiple single phase DCDC converter, each single phase DCDC converter preferably comprising at least two switching elements allowing to operate the single phase DCDC converter in a push-pull-mode. Particularly preferred, the single phase DCDC converter is configured as a buck type push-pull DCDC converter. The DCDC converter further comprises a second microcontroller configured for operating the DCDC converter.

The battery system of the invention further comprises a data line that is connected to the first communication interface of the control unit as described above and to a second communication interface of the DCDC converter. Therein, the data line provides a data communication between the control unit and the DCDC converter, as described in more detail below. According to the invention, the DCDC converter is configured to transmit a second state signal that is indicative of an operation state of a second microcontroller via the second communication interface, the data line and the first communication interface to the control unit, where the second state signal is preferably processed as described in detail above. The second state signal is indicative of operability or malfunction of the second microcontroller.

In a preferred first operation mode of the battery system of the invention, the power switch is controlled by the first microcontroller and the DCDC converter is controlled by the second microcontroller. In other words, the control unit and the DCDC converter operate substantially independent from each other, i.e., they do not control each other. However, also in the first operation mode, the second state signal indicative of operability of the DCDC converter might be continuously transmitted to the control unit. Further, in a preferred second operation mode of the battery system, the power switch is controlled by the switch control circuit of the control unit and the DCDC converter is controlled by the first microcontroller via the data line. In other words, the DCDC converter receives a first DCDC control signal via the data line, wherein the first DCDC control signal is generated by the first microcontroller. Therefore, the first microcontroller uses capacities that are normally used for controlling the power switch.

Particularly preferred, the first operation mode of the battery system is transferred to the second operation mode of the battery system, if a second state signal that is indicative of a malfunction of the second microcontroller is transmitted to the control unit via the data line. If the second state signal is continuously transmitted to the control unit, the second operation mode is initiated in response to a change of the signal content, i.e., in response to the signal indicating a malfunction of the second microcontroller instead of its operability. Alternatively, a second state signal may be only transmitted to the control unit in case the second microcontroller is malfunctioning for transferring the battery system to the second operation mode. In other words, on the level of the battery system the change from the first to the second operation mode only depends on the operation state of the second microcontroller.

However, as set forth above the DCDC converter receives the first operation voltage of the battery system as an input voltage. Hence, if on the level of the control unit the operation of the power switch is transferred to the switch control circuit due to a fault of the first microcontroller, the DCDC converter remains in normal operation, particularly as long as the power switch is set conductive. Preferably, the power switch is interconnected between the battery cell stack and the DCDC converter. In other words, if the power switch is set non-conductive due to a fault of the first microcontroller, e.g., after a given time constant, the DCDC converter is also disconnected from the battery stack and thus put into a safe state. The operation of the power switch by the switch control circuit is described in detail below.

In a further preferred embodiment, the control unit is formed on a first circuit carrier, such as e.g., a first printed circuit board, and the DCDC converter is formed on a second circuit carrier, e.g., a second printed circuit board. In other words, the control unit and the DCDC converter are built as standalone components, respectively. In other words, each of the control unit and the DCDC converter can be operated without the other component. Further, the data line provides a data connection between the first circuit carrier and the second circuit carrier. In other words, the data line is configured to be connected to the circuit carriers and further each of the circuit carriers comprises a suitable socket for connecting to the data line.

According to a preferred embodiment of the invention, the switch control circuit is configured for setting the power switch non-conductive after a first time period after receiving at least one state signal indicating a malfunction of the first or second microcontroller. In other words, the switch control circuit shuts off the battery system from any external load after a fixed first time period lapsed since an error of the first or second microcontroller has been detected. Therein, the shut off via the power switch preferably occurs irrespective of any other signal inputs to the switch control circuit. Thus, if the switch control circuit realizes a fault of the first microcontroller or the second microcontroller it starts a first timer for counting the first time period for switching the power switch to non-conductive state. This functionality advantageously provides a reliable shut down in case of failure of the first or second microcontroller failure and hence allows for a low FIT rate and a high ASIL rating (e.g. ASIL B) of a control unit according to the present invention. Alternatively, the switch control circuit is configured for setting the power switch non-conductive after a first time period only after receiving at least one state signal indicating a malfunction of the first microcontroller, wherein receiving a state signal indicating a malfunction of the second microcontroller solely leads to power switch control by the switch control circuit and DCDC converter control by the first microcontroller in prolonged manner.

Further preferred, the switch control circuit is configured for generating a second control signal that causes the power switch to be set non-conductive if the sensor signal (the state signal) exceeds a predetermined threshold. Therefore the switch control circuit preferably comprises at least one comparator circuit or operational amplifier that receives the sensor signal (the state signal) as a first input and outputs the second control signal. The predetermined threshold may be supplied to such comparator or operational amplifier as second input by an external signal or from an internal memory. Hence, the switch control circuit advantageously also realizes a sensor-based emergency shutdown of the power switch, i.e. the battery system. Such emergency shutdown is preferably realized additionally to the timer-based shutdown, i.e. preferably only during the first predetermined time period.

Also preferred, the switch control circuit is configured for setting the power switch conductive for a second time period after receiving at least one state signal indicating a malfunction of the first and/or second microcontroller. In other words, the switch control circuit generates and transmits a (third) control signal for setting the power switch conductive to the power switch for a fixed second time period starting with the detection of an error of one of the first and/or second microcontroller. Preferably, the power switch is set conductive irrespective of any other signal inputs to the switch control circuit during the second time period. Thus, the sensor-based emergency shut-down of the switch control circuit is postponed for the second time period, wherein a shut-down of the power switch is prevented. Also preferred, the switch control circuit is configured for setting the power switch conductive for a second time period only after receiving a state signal indicating a malfunction of the first microcontroller.

These feature advantageously allows for a transition phase between the first operation mode of the battery system and the second operation mode of the battery system, i.e., in response to a malfunction of the second microcontroller. Also, during the first operation mode, these features allow for a transition phase between the power switch control by the first microcontroller and the power switch control by the switch control circuit. This transition phase preferably applies before a sensor-based emergency shutdown is realized by the switch control circuit. Particularly preferred, the second time period is less than the FTTI of the plurality of battery cells and/or less than the first time period. This allows that the battery system reaches at safe state by applying the hardware-controlled sensor-based emergency shutdown by the switch control circuit within the fault tolerant time interval.

According to a further preferred embodiment, the battery system of the present invention further comprises at least one sensor that is configured for detecting at least one of a current, a voltage and a temperature of at least one of the plurality of battery cells as a sensor signal. In other words, the at least one sensor signal and/or the state signal is based on at least one of a voltage, a temperature and a current of at least one of the plurality of battery cells. Further preferred, the at least one sensor comprises a shunt resistor connected in series with one of the first and second node. The control unit thus comprises two input nodes for receiving a voltage drop over the shunt as sensor signal indicative of a battery current. The two input nodes may then be connected to the front end circuit and the switch control circuit.

Another aspect of the present invention relates to a DCDC converter for a battery system, comprising at least one single phase DCDC converter that is configured to receive a first operation voltage provided by a battery cell stack of the battery system. In other words, the single phase DCDC converter is connected to an input node of the DCDC converter, the input node being connected to the first stack node of the battery cell stack. Each of the at least one single phase DCDC converter preferably comprises at least two switching elements and is further preferred configured as a push-pull-converter. Particularly preferred, the at least one single phase DCDC converter is configured as a buck-type converter. Preferably, the DCDC converter has multiple single phase DCDC converters operating as multi phase DCDC.

The at least one single phase DCDC converter is further configured to output a second operation voltage based on the first operation voltage. The second output voltage is preferably output to a second output node of the battery system via an output node of the DCDC converter. The DCDC converter of the invention further comprises a second microcontroller that is configured to operate the at least one single phase DCDC converter. The second microcontroller may be configured to control duty cycles of switching elements of a single phase DCDC converter or phases of a multi-phase DCDC converter. Particularly preferred, operating the at least one single phase DCDC converter by the second microcontroller comprises generating and transmitting second DCDC control signals to the single phase DCDC converter. The second microcontroller may further detect inputs necessary for controlling the operation of the DCDC converter, e.g., input or output voltages.

The DCDC converter of the invention further comprises a second communication interface configured to forward a second state signal indicative of an operation state of a second microcontroller. Therein, the second state signal may be generated by the second microcontroller or by another circuit element of the DCDC converter, such as e.g., a second system basis chip of the DCDC converter. The second communication interface is preferably configured to be connected to a data line also connected with the first communication interface of the control unit for forwarding the second control signal to the control unit. In other words, in case of a malfunction of the second microcontroller, a second state signal indicative of this malfunction is transmitted to the control unit via the second communication interface. Hence, the battery system can be transferred to the second operation mode as described above, particularly by carrying out the power switch control by the switch control circuit.

Further, the DCDC converter of the invention is configured to receive a first DCDC control signal via the second communication interface. Therein, such first DCDC control signal is received from the first microcontroller performing the functions of the second microcontroller in the second operation mode of the battery system as described above. In other words, only after the second state signal indicative of a malfunction of the second microcontroller was transmitted via the second communication interface to the control unit, the DCDC converter may receive the first DCDC control signal from the control unit. The DCDC converter is further configured to operate at least one single phase DCDC converter based on the first DCDC control signal, particularly by bypassing the (malfunctioning) second microcontroller. Hence, the operation of the at least one single phase DCDC converter is resumed although the second microcontroller is malfunctioning and thus availability of the DCDC is increased.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media, e.g. a CD, flash drive, or the like.

Also, a person of skill in the art should recognize that the functionality of various computing devices may be combined or integrated into a single computing device, or the functionality of a particular computing device may be distributed across one or more other computing devices without departing from the scope of the embodiments of the present invention.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Figure 1: illustrates a schematic circuit diagram of a battery system according to an embodiment;
- Figure 2: illustrates a schematic circuit diagram of a battery system according to another embodiment;
- Figure 3: schematically illustrates the operation of a DCDC converter according to an embodiment;
- Figure 4: schematically illustrates the operation of a control unit according to an embodiment;
- Figure 5: illustrates a schematic view of a switch control circuit;
- Figure 6: illustrates a schematic view of another switch control circuit; and
- Figure 7: illustrates a timeline of a current of a battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

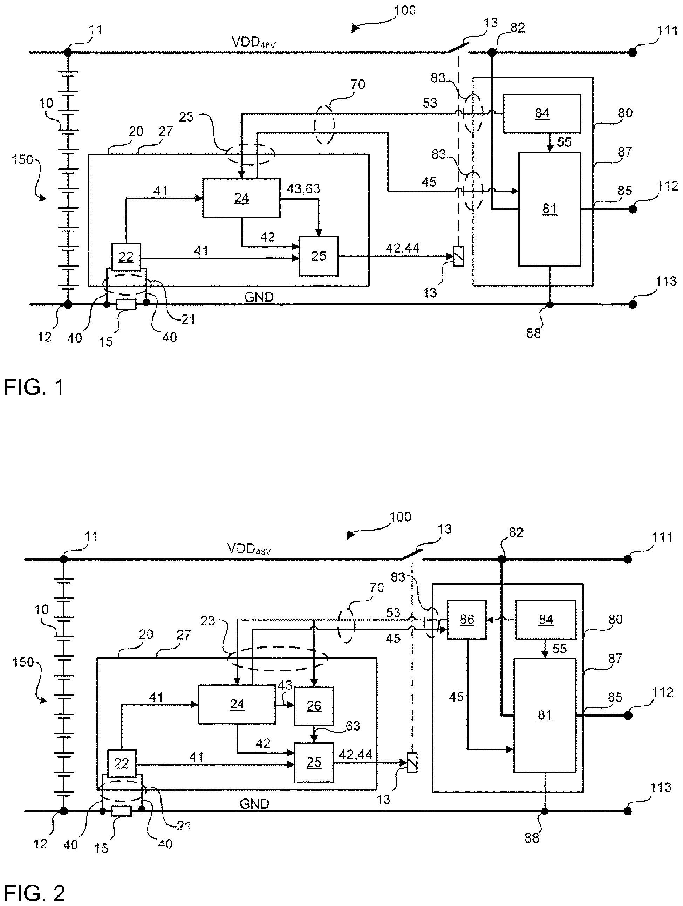

Figure 1 schematically illustrates a battery system 100 according to an embodiment of the invention. The battery system 100 comprises a plurality of battery cells 10 forming a battery cell stack 150 interconnected between a first stack node 11 and a second stack node 12. A first operation voltage VDD, i.e., 48 V, applies to the first stack node 11, while the second stack node 12 is at ground voltage level. The first stack node 11 is connected to a first output node 111 of the battery system 100 and the second stack node 12 is connected to a third output node 113 of the battery system 100. A power switch 13 is interconnected between the first stack node 11 and the first output node 111. The power switch 13 is part of a relay 13 and can be set either conductive or non-conductive based on a control signal 42, 44.

The control of the power switch 13 is carried out by the control unit 20 that is constructed as a standalone component disposed on a first circuit carrier 27. The control unit 20 may carry out further control operations with respect to the battery system 100 and is preferably configured as a battery management system, BMS, for measurement, balancing and communications.

The battery system 100 further comprises a DCDC converter 80 that is also constructed as a stand alone component disposed on a second circuit carrier 87. The DCDC converter 80 comprises a second microcontroller 84 and at least one single phase DCDC converter 81. The latter receives the first operation voltage VDD of the battery cell stack 150 via a DCDC input node 82 that is interconnected between the first stack node 11 and the first output node 111 and downstream of the power switch 13. The at least one single phase DCDC converter 81 may be configured as buck converter and may convert the input voltage to an output voltage based on a duty cycle of switching elements (not shown) controlled by second microcontroller 84 via a second DCDC control signal 55. The converted voltage is output via DCDC output node 85 to a second output node 112 of the battery system 100.

The DCDC converter 80 further comprises a second communication interface 83 for transmitting and receiving signals via a data line 70. The data line 70 is also connected to a first communication interface 23 of the control unit 20, wherein the first communication interface 23 is also configured for transmitting and receiving signals via the data line 70.

The control unit 20 further comprises an input node 21 that is configured for receiving a differential input and thus comprises two actual input nodes. These input nodes are connected upstream and downstream, respectively, of a shunt resistor 15 that is interconnected between the second stack node 12 and the third output node 113. Hence, the input node 21 receives a voltage drop over the shunt resistor 15 as a sensor signal 40.

The control unit 20 further comprises a front end circuit 22 for receiving and processing the sensor signal 40 in order to generate a battery signal 41 based on the sensor signal 40. In the present case, the battery signal 41 is indicative of a current provided by the plurality of battery cells 10 and is generated utilizing a known value of the resistance R of the shunt resistor 15.

The control unit 20 comprises a first microcontroller 24 that is connected to the front end circuit 22 and receives the battery signal 41 from the front end circuit 22. The microcontroller 24 is further configured to generate a first control signal 42 based on the battery signal 41. Therein, the first control signal 42 is suitable for setting the relay 13 either conductive or non-conductive. Particularly, the first microcontroller 24 generates a first control signal 42 that sets the relay 13 conductive, if the battery signal 41 is indicate of a current within the standard operation conditions of the battery system 100, and generates a first control signal 42 that sets relay 13 non-conductive if the battery signal 41 is indicate of overcurrent, particularly if the battery signal 41 is indicative of an overcurrent exceeding a predetermined first threshold.

The first microcontroller 24 further receives a second state signal 53 from the second microcontroller 84 of the DCDC converter 80 via the first communication interface 23 of the first microcontroller 24. Therein, the second state signal 53 is indicative of the operability or a malfunction of the second microcontroller 84. The microcontroller 24 is further configured to perform a self-check procedure to determine whether a fault persists within the first microcontroller 24. Based on the result of this self-check procedure and the received second state signal 53, the microcontroller 24 further generates and outputs a combined state signal 63 that is indicative of an operation state of the first microcontroller 24 and the second microcontroller 84. The combined state signal 63 is either indicative of an operability of both of the first and second microcontrollers 24, 84 or is indicative of a malfunction of one of the first and second microcontroller 24, 84, i.e. takes one of two possible values, e.g. "0" or "1". Further, if no second state signal 53 is received at all or if a second state signal 53 is received that indicates an operability of the second microcontroller 84, the first microcontroller 24 may also output solely the first state signal 43 to the switch control circuit.

The control unit 20 further comprises a switch control circuit 25 that is connected to the front end circuit 22 and the microcontroller 24. The switch control circuit 25 receives the battery signal 41 as an input from the front end circuit 22. As further inputs the switch control circuit 25 receives the first control signal 42 and the state signal 63 from the microcontroller 24.

The switch control circuit 25 is configured to generate a second control signal 44 based on the received battery signal 41. Therein, the second control signal 44 is suitable for setting the relay 13 either conductive or non-conductive. The switch control circuit 25 generates a second control signal 44 that sets the relay 13 conductive if the battery signal 41 is indicate of a current within standard operation conditions of the battery system 100 and generates a second control signal 44 that sets relay 13 non-conductive if the battery signal 41 is indicate of overcurrent. Particularly, the switch control circuit 25 may generate the second control signal if the battery signal 41 is indicative of an overcurrent exceeding a predetermined second threshold, wherein the second threshold may be the same as or different from the first threshold.

The switch control circuit 25 outputs either the first control signal 42 or the second control signal 44 to the relay 13. The switch control circuit 25 puts one of these signals 42, 44 through to the power switch 13 based on the state signal 63. In other words, in dependency of the value of the state signal 63, i.e. whether it is indicative of operability of both microcontrollers 24, 84 or a malfunction of one of the microcontrollers 24, 84, the switch control circuit 25 selects one of the first and second control signal 42, 44 and outputs the selected control signal to relay 13. Thus, the control unit 20 allows for continued control of relay 13 based on sensor signal 40 if the first microcontroller 24 has a malfunction and cannot longer reliably control the relay 13 in order to improve availability of control unit 20. Further, the control unit allows for controlling relay 13 via switch control circuit 25 if the second microcontroller 84 has a malfunction, thus freeing capacities of the first microcontroller 24.

Particularly, in response to receiving a second state signal 53 indicating a malfunction of second microcontroller 84, the first microcontroller 24 is not only configured to change the value of the combined state signal 63 in order to activate relay 13 control via the switch control circuit 25. Additionally, on receiving a second state signal 53 indicating a malfunction of second microcontroller 84, the first microcontroller 24 further loads a software of the second microcontroller 84 from a memory (not shown) and starts to perform the operations of the second microcontroller 84. Particularly, the first microcontroller 24 generates at least one first DCDC control signal 45 and transmits it via the first communication interface 23, the data line 70, and the second communication interface 83 to the at least one single phase DCDC converter 81 for controlling the single phase DCDC converter 81. Hence, the first microcontroller 24 is further configured to improve availability of DCDC converter 80 in response to a malfunction of the second microcontroller 84.

Figure 2 illustrates a schematic circuit diagram of a battery system 100 according to another embodiment. Therein, same elements are denoted by same reference signs and a repeated description is omitted. The battery system 100 of Figure 2 differs from that of Figure 1 in that the DCDC controller 80 comprises a second system basis chip 86 that is configured to check the operation state of the second microcontroller 84 and to generate and transmit a second state signal 53 indicative of a malfunction of second microcontroller 84 in case of such malfunction. The second SBC 86 is further configured to receive the first DCDC control signal 45 and to forward the first DCDC control signal 45 to the single phase DCDC converter 81.

The battery system 100 further differs from that of Figure 1 in that the control unit 20 comprises a first system basis chip 26. The first SBC 26 is configured to receive the first state signal 43 from the first microcontroller 24 and the second state signal 53 of the second microcontroller 84 and to generate a combined state signal 63 as described above. The first SBC 26 is further configured to transmit the combined signal 63 to switch control circuit 25.

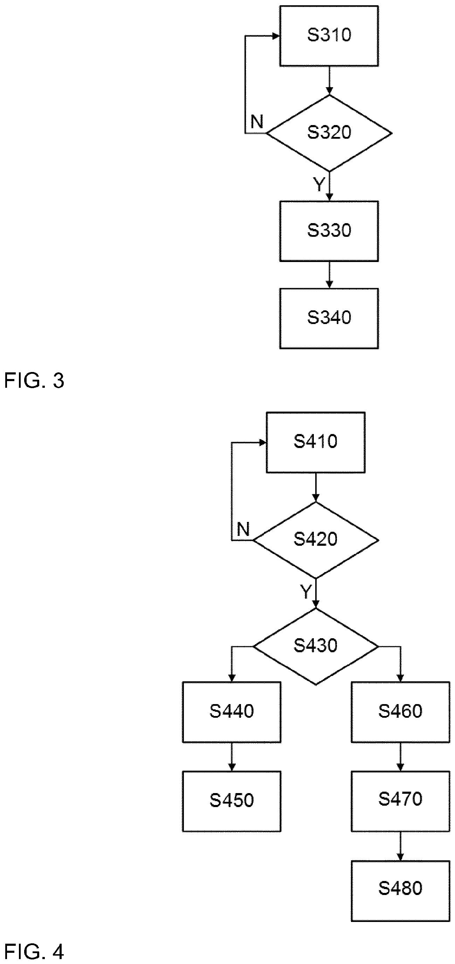

Figure 3 schematically illustrates the basic operation steps of a DCDC converter 80 according to an embodiment of the invention. During step S310, the DCDC converter 80 functions normally, i.e., without a fault of any component. The battery system 100 is thus in the second operation mode. In step S320 it is checked whether a malfunction of the second microcontroller 84 is present. If this determination is negative, normal operation S310 is continued. If the determination in S320 is positive, the operation proceeds to step S330, wherein a second state signal 53 indicative of the malfunction of the second microcontroller 84 is transmitted via second communication interface 83 and data line 70 to control unit 20. Subsequently to step S330, a first DCDC control signal 45 is received via data line 70 and second communication interface 83 for controlling the single phase DCDC converter 81.

Figure 4 schematically illustrates the basic operation steps of a control unit 20 according to an embodiment of the invention. During step 410, the control unit 20 functions normally, i.e., without a fault of any component. The battery system 100 is thus in the second operation mode. In step S420 it is checked whether a state signal 43, 53 indicative of a malfunction is present at the control unit 20. If this determination is negative, normal operation S410 is continued. If the determination in S420 is positive, it is then determined in step S430 whether the first state signal 43 indicates a malfunction of the first microcontroller 24 and/or whether the second state signal 53 indicates a malfunction of the second microcontroller 84.

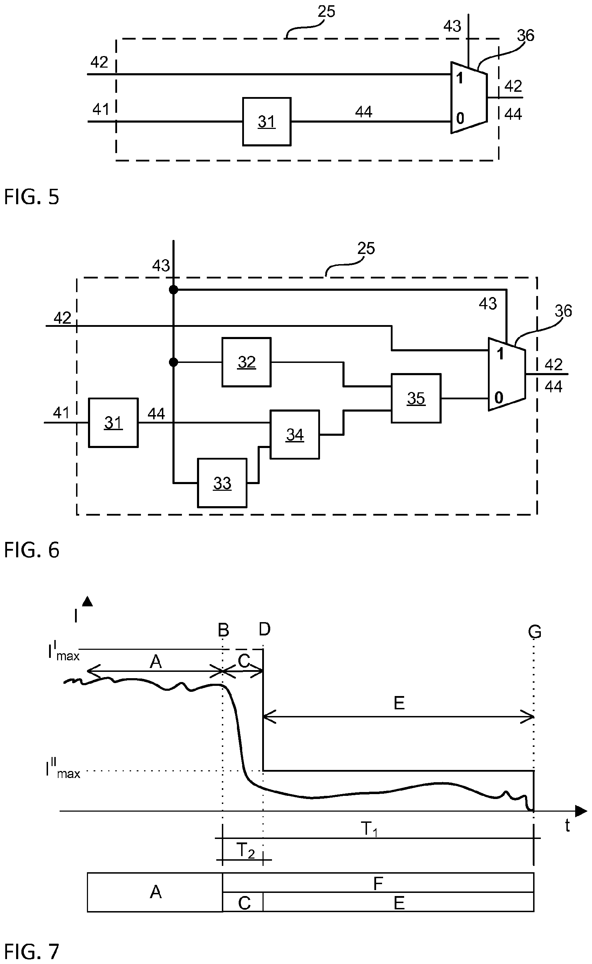

If the first state signal 43 indicates a malfunction of the first microcontroller 24, the operation always proceeds with step S440, irrespective of the state of second microcontroller 84. In step S440, the control of power switch 13 is transferred to the second control signal 44. In other words, switch control signal 25 starts to forward the second control signal 44 instead of the first control signal 42 to the power switch 13. Hence, the fault of the first microcontroller 24 cannot negatively impact the operation of the power switch 13. In step S450, the first microcontroller 24 is deactivated as described in detail with respect to Figure 7.

If the second state signal 53 indicates a malfunction of the second microcontroller 84, the operation proceeds with step S460, if there is no malfunction of the first microcontroller 24. Also in step S460, the control of power switch 13 is transferred to the second control signal 44. In other words, switch control signal 25 starts to forward the second control signal 44 instead of the first control signal 42 to the power switch 13. Hence, capacities of the first microcontroller 24 previously used to generate first control signal 42 are freed. In step S470 the software of the second microcontroller 84 is loaded from an internal or external memory and the first microcontroller 24 starts to run the software of the second microcontroller 84. Particularly, the first microcontroller 24 generates a first DCDC control signal 45 in step S480 and transmits it via the interfaces 23, 83 and data line 70 to single phase DCDC converter 81.

Figure 5 illustrates a schematic view of a switch control circuit 25 according to an embodiment. The switch control circuit 25 of this embodiment comprises a multiplexer 36 and a comparator 31. The comparator 31 is configured for comparing the battery signal 41 with a predetermined threshold. Therein, the comparator 31 may comprise a further input (not shown) for receiving the predetermined threshold. The comparator 31 outputs a second control signal 44 that reflects whether the battery signal 41 exceeds the predetermined threshold or not. The multiplexer 36 comprises two data signal inputs and one control signal input. The first control signal 42 is supplied to a first data signal input and the output of comparator 31 is supplied to the second data signal output. A combined state signal 63 as described above and generated by first microcontroller 24 of first system basis chip 26 is supplied to the control signal input. The multiplexer 36 outputs one of the first and second control signal 42, 44 based on the value of the received combined state signal 63.

Figure 6 illustrates a schematic view of a switch control circuit 25 according to another embodiment. The switch control circuit 25 of this embodiment realizes the functionalities of the battery system 100 and provides further functionalities related to a first time period and a second time period as described above and under reference to the timeline of Figure 7.

The switch control circuit 25 of Figure 6 receives as inputs the battery signal 41, the first control signal 42 and the combined state signal 63. During a normal operation mode A (see Fig. 7) of the battery system 100, the first microcontroller 24 operates without fault and a maximum current I^{I}ₘₐₓ is allowed to be provided by the battery system 100. During operation mode A, combined state signal 63 is indicative of the operability of first microcontroller 24 and of second microcontroller 84 and takes the binary value "1". The combined state signal 63 is supplied to the multiplexer 36 as control signal input and sets the signal output of multiplexer 36 to the first data signal input 1 to which the first control signal 42 is supplied from the first microcontroller 24. Hence, during normal operation mode A, the first control signal 42 is output to the relay 13 via multiplexer 36 and thus the relay 13 is controlled by first microcontroller 24. Particularly, the first microcontroller 24 sets the relay 13 non-conductive via the first control signal 42 if the battery signal 41 indicates a current that exceeds I^{I}ₘₐₓ.

At time point B shown in Figure 7, a failure occurs in the first microcontroller 24 and is immediately realized by the first microcontroller 24 itself (Figure 1) or by first SBC 26 connected to the first microcontroller 24 (Figure 2). Alternatively, a failure occurs in second microcontroller 84 and is either realized by the second microcontroller 84 itself or by second SBC 86. Hence, from time point B the combined state signal 63 is indicative of a malfunction of the first or second microcontroller 24, 84 by taking the value "0". Thus, the control signal input of the multiplexer 36 is set to the second data signal input 0 via the state signal 63.

Further, at time point B at least one second electrical consumer of an electric vehicle (not shown) that is supplied by the battery system 100 and is not security relevant for the vehicle is disconnected from the battery system 100 via a control unit (not shown) that might be the system basis chip 26 of Figure 2. Hence, as shown in Figure 7, the current I (curved line) starts dropping from the time point B in order to increase safety of the vehicle.

The second data signal input 0 of multiplexer 36 is connected to the battery signal 41 by a hardware path described in more detail in the following. At least with respect to the embodiment of the control unit 20 as illustrated in Figures 1 and 2, the relay 13 is set conductive as long as it receives a high signal "1".

As a part of said hardware path, the second data signal input of multiplexer 36 is connected to the state signal 63 via an OR gate 35 and a first latching element 32. Therein, the first latching element 32 receives state signal 63 as an input and transmits an output to OR gate 35. The first latching element 32 latches a high input signal supplied thereto for a predetermined second time period T₂. As the value of the state signal 63 changes from high to low at time point B of Figure 7, the first latching element 32 outputs a high value "1" to a first input of OR gate 35 until the second time period T₂, which started at time point B, lapses. The OR gate 35 outputs a high value "1" as long as a single input provided thereto is high and thus provides a high signal "1" to the second date signal input 0 of the multiplexer 36 until the second time period T₂, started at time point B, lapses.

As illustrated in Figure 7 during the second time period T₂, i.e. during initial mode C, the current drops below a second current threshold I^{II}ₘₐₓ due to cutting not security relevant second electrical consumers from the battery system 100. During initial mode, no threshold based control of relay 13 occurs in order to allow reducing the current consumption below I^{II}ₘₐₓ while preventing a premature shut down of the battery system 100 via the relay 13.

After lapse of the second time period T₂, which started at time point B, the first latching element 32 does not longer provide a high signal "1" to the first input of OR gate 35. Thus, whether or not the OR gate 35 outputs a high signal to multiplexer 36 solely depends on the signal applied to a second input of the OR gate 35. The second input of the OR gate 35 receives an output signal of an AND gate 34, the inputs of which are described below.

A second input of the AND gate 34 is connected to the state signal 63 via a second latching element 33. The second latching element 33 latches a high input signal supplied thereto for a predetermined first time period T₁. As the value of the state signal 63 changes from high to low at time point B of Figure 7, the second latching element 33 outputs a high value "1" until the lapse of first time period T₁, which started at time point B. Thus, at the end of the first time period T₁, i.e. at point G illustrated in Figure 7, the second latching element 33 outputs a low signal "0" to AND gate 34 that thus also outputs a low signal "0" to multiplexer 36. Hence, at point G the availability mode of the battery system 100 that started with a malfunction at point B ends and the battery system 100 is inevitably shut down by setting relay 13 non conductive.

A first input of the AND gate 34 is connected to a comparator 31 as already described with respect to Figure 5 that receives the battery signal 41 and outputs a second control signal 44 based on a comparison between this signal 41 and a predetermined threshold. Therein, the comparator 31 outputs a high signal "1" if the battery signal 41 indicates a current below threshold current I^{II}ₘₐₓ as illustrated in Figure 7 and outputs a low signal "0" if the battery signal 41 indicates a current above threshold current I^{II}ₘₐₓ as illustrated in Figure 7.

Hence, during the first time period T₁ and after the lapse of the second time period T₂, i.e. between the points D and G or during low performance mode E as illustrated in Figure 7, a sensor-based control of the relay 13 is performed in order to realize an overcurrent protection, whereas the overcurrent is lowered from I^{I}ₘₐₓ to I^{II}ₘₐₓ. In other words, during the low performance mode E, the battery system 100 is shut down via relay 13 if the state signal 41 (or the amplified sensor signal 41') indicates a current above threshold current I^{II}ₘₐₓ. In case, the state signal 63 ("0") is indicative of a malfunction of the second microcontroller 84, the first microcontroller 24 can control the operations of the DCDC converter during the first time period T1, eventually during loading and executing the software of µC2 during T2.

Latching times of the latching elements 32 and 33, i.e., the first time period T₁ and the second time period T₂, may be counted by timers. The timers for counting the first time period T₁ and the second time period T₂ may be started at the time when the switch control circuit 25 realizes a fault of the first microcontroller 24 or the second microcontroller 84.

### Reference signs

- 10: battery cell
- 11: first stack node
- 12: second stack node
- 13: power switch (relay)
- 15: sensor (shunt resistor)
- 20: control unit
- 21: input node
- 22: front end circuit
- 23: first communication interface
- 24: first microcontroller
- 25: switch control circuit
- 26: first system basis chip
- 27: first circuit carrier
- 31: comparator circuit
- 32: first latching element
- 33: second latching element
- 34: "AND" gate
- 35: "OR" gate
- 36: multiplexer
- 40: sensor signal
- 41: battery signal
- 42: first control signal
- 43: first state signal
- 44: second control signal
- 45: first DCDC control signal
- 53: second state signal
- 55: second DCDC control signal
- 63: combined state signal
- 70: data line
- 80: DCDC converter
- 81: single phase DCDC converter
- 82: DCDC input node
- 83: second communication interface
- 84: second microcontroller
- 85: DCDC output node
- 86: second system basis chip
- 87: second circuit carrier
- 88: DCDC ground node
- 100: battery system
- 111: first output node
- 112: second output node
- 113: ground node
- 150: battery cell stack

## Claims

1. Control unit (20) for a battery system (100), comprising:
a first microcontroller (24) configured to receive a signal (40, 41) indicative of a state of at least one of a plurality of battery cells (10) and to generate a first control signal (42) suitable for controlling a power switch (13) based on the signal (40, 41);
a first communication interface (23) configured to receive a second state signal (53) indicative of an operation state of a second microcontroller (84); and
a switch control circuit (25) configured to: receive the first control signal (42) and to generate a second control signal (44) suitable for controlling the power switch (13) based on the signal (40, 41), and
the switch control circuit comprising a multiplexer (36) to output one of the first and second control signal (42, 44) to the power switch (13) based on at least one received state signal (43, 53, 63) indicative of an operation state of the first microcontroller (24) and the second microcontroller (84).

2. Control unit (20) according to claim 1, with the switch control circuit (25) configured to:
transmit the first control signal (42) to the power switch (13), if the at least one state signal (43, 53, 63) is indicative of an operability of the first and second microcontrollers (24, 84),
transmit the second control signal (44) to the power switch (13), if the at least one state signal (43, 53, 63) is indicative of a malfunction of the first or second microcontroller (24, 84).

3. Control unit (20) according to claim 1 or 2, wherein the first microcontroller (24) is configured to load the software of the second microcontroller (84), if the second state signal (53) is indicative of a malfunction of the second microcontroller (84).

4. Control unit (20) according to claim 3, wherein the first microcontroller (24) is further configured to perform the functions of the second microcontroller (84), if the second state signal (53) is indicative of a malfunction of the second microcontroller (84).

5. Control unit (20) according to any one of the claims 1 to 4, wherein the first microcontroller (24) is configured to generate a first state signal (43) based on its own operation state, and preferably to generate a combined state signal (63) based on its own operation state and based on the received second state signal (53).

6. Control unit (20) according to any one of the claims 1 to 5, further comprising a system basis chip (26) configured to receive a first state signal (43) indicative of an operation state of at least the first microcontroller (24) and/or the second state signal (53) and to transmit a combined state signal (63) to the switch control circuit (25).

7. Battery system (100), comprising:
a battery cell stack (150) configured for providing a first operation voltage to a first output node (111);
a power switch (13) configured for selectively disconnecting the battery cell stack (150) from the first output node (111);
a DCDC converter (80) configured to receive the first operation voltage as an input voltage and to output a second operation voltage to a second output node (112);
a control unit (20) according to any one of claims 1 to 6; and
a data line (70) connected to the first communication interface (23) of the control unit (20) and a second communication interface (83) of the DCDC converter (80),
wherein the DCDC converter (80) is configured to transmit a second state signal (53) indicative of an operation state of a second microcontroller (84) of the DCDC converter (80) via the second communication interface (83).

8. Battery system (100) according to claim 7, wherein in a first operation mode of the battery system (100) the power switch (13) is controlled by the first microcontroller (24) and the DCDC converter (80) is controlled by the second microcontroller (84), and wherein in a second operation mode of the battery system (100) the power switch (13) is controlled by the switch control circuit (25) and the DCDC converter (80) is controlled by the first microcontroller (24) via the data line (70).

9. Battery system (100) according to claim 7 or 8, wherein the first operation mode is transferred to the second operation mode, if the second state signal (53) indicative of a malfunction of the second microcontroller (84) is transmitted to the control unit (20) via the data line (70).

10. Battery system (100) according to any one of the claims 7 to 9, wherein the power switch (13) is interconnected between the battery cell stack (150) and the DCDC converter (80).

11. Battery system (100) according to any one of the claims 7 to 10, wherein the control unit (20) is formed on a first circuit carrier (27), the DCDC converter (80) is formed on a second circuit carrier (87) and the data line (70) provides a data connection between the first circuit carrier (27) and the second circuit carrier (87).

12. Battery system (100) according to any one of the claims 7 to 11, wherein the DCDC converter (80) comprises
at least one single phase DCDC converter (81) configured to receive a first operation voltage provided by a battery cell stack (150) of the battery system (100) and to output a second operation voltage;
a second microcontroller (84) configured to operate the at least one single phase DCDC converter (81); and
a second communication interface (83) configured to forward a second state signal (53) indicative of an operation state of a second microcontroller (84).

13. Battery system (100) according to claim 12, wherein the DCDC converter (80) is further configured to receive a first DCDC control signal (45) via the second communication interface (83) and to operate at least one single phase DCDC converter (81) based on the first DCDC control signal (45).

14. Battery system (100) according to claim 12 or 13, wherein at least one single phase DCDC converter (81) comprises at least two switching elements and wherein operating the single phase DCDC converter (81) comprises setting the duty cycles of the at least two switching elements.

15. Battery system (100) according to any one of claims 12 to 14, wherein the DCDC converter (80) further comprises a system basis chip (86) configured to detect a malfunction of the second microcontroller (84) and to transmit the second state signal (53) via the second communication interface (83).

## Patentansprüche

1. Steuereinheit (20) für ein Batteriesystem (100), umfassend:
einen ersten Mikrocontroller (24), der konfiguriert ist, um ein Signal (40, 41) zu empfangen, das einen Zustand von mindestens einer einer Vielzahl von Batteriezellen (10) anzeigt, und um ein erstes Steuersignal (42) zu erzeugen, das geeignet ist, einen Leistungsschalter (13) basierend auf dem Signal (40, 41) zu steuern;
eine erste Kommunikationsschnittstelle (23), die konfiguriert ist, um ein zweites Zustandssignal (53) zu empfangen, das einen Betriebszustand eines zweiten Mikrocontrollers (84) anzeigt; und
eine Schaltsteuerschaltung (25), die konfiguriert ist, um: das erste Steuersignal (42) zu empfangen und ein zweites Steuersignal (44) zu erzeugen, das geeignet ist, den Leistungsschalter (13) basierend auf dem Signal (40, 41) zu steuern, und
die Schaltsteuerschaltung einen Multiplexer (36) umfasst, um eines des ersten und zweiten Steuersignals (42, 44) an den Leistungsschalter (13) auf der Grundlage von mindestens einem empfangenen Zustandssignal (43, 53, 63) auszugeben, das einen Betriebszustand des ersten Mikrocontrollers (24) und des zweiten Mikrocontrollers (84) anzeigt.

2. Steuereinheit (20) nach Anspruch 1, wobei die Schaltsteuerschaltung (25) so konfiguriert ist, dass sie:
das erste Steuersignal (42) an den Leistungsschalter (13) überträgt, wenn das mindestens eine Zustandssignal (43, 53, 63) eine Funktionsfähigkeit des ersten und zweiten Mikrocontrollers (24, 84) anzeigt,
das zweite Steuersignal (44) an den Leistungsschalter (13) überträgt, wenn das mindestens eine Zustandssignal (43, 53, 63) eine Fehlfunktion des ersten oder zweiten Mikrocontrollers (24, 84) anzeigt.

3. Steuereinheit (20) nach Anspruch 1 oder 2, wobei der erste Mikrocontroller (24) konfiguriert ist, um die Software des zweiten Mikrocontrollers (84) zu laden, wenn das zweite Zustandssignal (53) eine Fehlfunktion des zweiten Mikrocontrollers (84) anzeigt.

4. Steuereinheit (20) nach Anspruch 3, wobei der erste Mikrocontroller (24) ferner konfiguriert ist, um die Funktionen des zweiten Mikrocontrollers (84) auszuführen, wenn das zweite Zustandssignal (53) eine Fehlfunktion des zweiten Mikrocontrollers (84) anzeigt.

5. Steuereinheit (20) nach einem der Ansprüche 1 bis 4, wobei der erste Mikrocontroller (24) konfiguriert ist, um ein erstes Zustandssignal (43) auf der Grundlage seines eigenen Betriebszustands zu erzeugen, und vorzugsweise, um ein kombiniertes Zustandssignal (63) auf der Grundlage seines eigenen Betriebszustands und auf der Grundlage des empfangenen zweiten Zustandssignals (53) zu erzeugen.

6. Steuereinheit (20) nach einem der Ansprüche 1 bis 5, die ferner einen Systembasischip (26) umfasst, der so konfiguriert ist, dass er ein erstes Zustandssignal (43) empfängt, das einen Betriebszustand zumindest des ersten Mikrocontrollers (24) und/oder das zweite Zustandssignal (53) anzeigt, und ein kombiniertes Zustandssignal (63) an die Schaltsteuerschaltung (25) sendet.

7. Batteriesystem (100), umfassend:
einen Batteriezellenstapel (150), der zum Bereitstellen einer ersten Betriebsspannung an einem ersten Ausgangsknoten (111) konfiguriert ist;
einen Leistungsschalter (13), der zum selektiven Trennen des Batteriezellenstapels (150) von dem ersten Ausgangsknoten (111) konfiguriert ist;
einen DCDC-Wandler (80), der konfiguriert ist, um die erste Betriebsspannung als eine Eingangsspannung zu empfangen und eine zweite Betriebsspannung an einen zweiten Ausgangsknoten (112) auszugeben;
eine Steuereinheit (20) nach einem der Ansprüche 1 bis 6; und
eine Datenleitung (70), die mit der ersten Kommunikationsschnittstelle (23) der Steuereinheit (20) und einer zweiten Kommunikationsschnittstelle (83) des DCDC-Wandlers (80) verbunden ist,
wobei der DCDC-Wandler (80) konfiguriert ist, um ein zweites Zustandssignal (53) zu übertragen, das einen Betriebszustand eines zweiten Mikrocontrollers (84) des DCDC-Wandlers (80) über die zweite Kommunikationsschnittstelle (83) anzeigt.

8. Batteriesystem (100) nach Anspruch 7, wobei in einem ersten Betriebsmodus des Batteriesystems (100) der Leistungsschalter (13) von dem ersten Mikrocontroller (24) gesteuert wird und der DCDC-Wandler (80) von dem zweiten Mikrocontroller (84) gesteuert wird, und wobei in einem zweiten Betriebsmodus des Batteriesystems (100) der Leistungsschalter (13) von der Schaltsteuerschaltung (25) gesteuert wird und der DCDC-Wandler (80) von dem ersten Mikrocontroller (24) über die Datenleitung (70) gesteuert wird.

9. Batteriesystem (100) nach Anspruch 7 oder 8, wobei der erste Betriebsmodus in den zweiten Betriebsmodus überführt wird, wenn das zweite Zustandssignal (53), das eine Fehlfunktion des zweiten Mikrocontrollers (84) anzeigt, über die Datenleitung (70) an die Steuereinheit (20) übertragen wird.

10. Batteriesystem (100) nach einem der Ansprüche 7 bis 9, wobei der Leistungsschalter (13) zwischen dem Batteriezellenstapel (150) und dem DCDC-Wandler (80) geschaltet ist.

11. Batteriesystem (100) nach einem der Ansprüche 7 bis 10, wobei die Steuereinheit (20) auf einem ersten Schaltungsträger (27) ausgebildet ist, der DCDC-Wandler (80) auf einem zweiten Schaltungsträger (87) ausgebildet ist und die Datenleitung (70) eine Datenverbindung zwischen dem ersten Schaltungsträger (27) und dem zweiten Schaltungsträger (87) herstellt.

12. Batteriesystem (100) nach einem der Ansprüche 7 bis 11, wobei der DCDC-Wandler (80) Folgendes umfasst
mindestens einen einphasigen DCDC-Wandler (81), der konfiguriert ist, um eine erste Betriebsspannung zu empfangen, die von einem Batteriezellenstapel (150) des Batteriesystems (100) bereitgestellt wird, und um eine zweite Betriebsspannung auszugeben;
einen zweiten Mikrocontroller (84), der konfiguriert ist zum Betreiben des mindestens einen einphasigen DCDC-Wandlers (81); und
eine zweite Kommunikationsschnittstelle (83), die konfiguriert ist, um ein zweites Zustandssignal (53) weiterzuleiten, das einen Betriebszustand eines zweiten Mikrocontrollers (84) anzeigt.

13. Batteriesystem (100) nach Anspruch 12, wobei der DCDC-Wandler (80) ferner konfiguriert ist, um ein erstes DCDC-Steuersignal (45) über die zweite Kommunikationsschnittstelle (83) zu empfangen und mindestens einen einphasigen DCDC-Wandler (81) auf der Grundlage des ersten DCDC-Steuersignals (45) zu betreiben.

14. Batteriesystem (100) nach Anspruch 12 oder 13, wobei mindestens ein einphasiger DCDC-Wandler (81) mindestens zwei Schaltelemente umfasst und wobei das Betreiben des einphasigen DCDC-Wandlers (81) die Einstellung der Arbeitszyklen der mindestens zwei Schaltelemente umfasst.

15. Batteriesystem (100) nach einem der Ansprüche 12 bis 14, wobei der DCDC-Wandler (80) ferner einen Systembasis-Chip (86) umfasst, der konfiguriert ist, um eine Fehlfunktion des zweiten Mikrocontrollers (84) zu erkennen und das zweite Zustandssignal (53) über die zweite Kommunikationsschnittstelle (83) zu übertragen.

## Revendications

1. Unité de commande (20) pour un système de batterie (100), comprenant :
un premier microcontrôleur (24) configuré pour recevoir un signal (40, 41) indiquant un état d'au moins l'un d'une pluralité d'éléments de batterie (10) et pour générer un premier signal de commande (42) adapté pour commander un commutateur de puissance (13) sur la base du signal (40, 41) ;
une première interface de communication (23) configurée pour recevoir un deuxième signal d'état (53) indiquant un état de fonctionnement d'un deuxième microcontrôleur (84) ; et
un circuit de commande de commutateur (25) configuré pour : recevoir le premier signal de commande (42) et pour générer un deuxième signal de commande (44) adapté pour commander le commutateur de puissance (13) sur la base du signal (40, 41), et
le circuit de commande de commutateur comprenant un multiplexeur (36) pour délivrer en sortie l'un des premier et deuxième signaux de commande (42, 44) au commutateur de puissance (13) sur la base d'au moins un signal d'état (43, 53, 63) reçu indiquant un état de fonctionnement du premier microcontrôleur (24) et du deuxième microcontrôleur (84).

2. Unité de commande (20) selon la revendication 1, avec le circuit de commande de commutateur (25) configuré pour :
transmettre le premier signal de commande (42) au commutateur de puissance (13), si l'au moins un signal d'état (43, 53, 63) indique une aptitude au fonctionnement des premier et deuxième microcontrôleurs (24, 84),
transmettre le deuxième signal de commande (44) au commutateur de puissance (13), si l'au moins un signal d'état (43, 53, 63) indique un dysfonctionnement du premier ou du deuxième microcontrôleur (24, 84).

3. Unité de commande (20) selon la revendication 1 ou 2, dans laquelle le premier microcontrôleur (24) est configuré pour charger le logiciel du deuxième microcontrôleur (84), si le deuxième signal d'état (53) indique un dysfonctionnement du deuxième microcontrôleur (84).

4. Unité de commande (20) selon la revendication 3, dans laquelle le premier microcontrôleur (24) est en outre configuré pour réaliser les fonctions du deuxième microcontrôleur (84), si le deuxième signal d'état (53) indique un dysfonctionnement du deuxième microcontrôleur (84).

5. Unité de commande (20) selon l'une quelconque des revendications 1 à 4, dans laquelle le premier microcontrôleur (24) est configuré pour générer un premier signal d'état (43) sur la base de son propre état de fonctionnement, et de préférence pour générer un signal d'état combiné (63) sur la base de son propre état de fonctionnement et sur la base du deuxième signal d'état (53) reçu.

6. Unité de commande (20) selon l'une quelconque des revendications 1 à 5, comprenant en outre une puce de base de système (26) configurée pour recevoir un premier signal d'état (43) indiquant un état de fonctionnement d'au moins le premier microcontrôleur (24) et/ou le deuxième signal d'état (53) et pour transmettre un signal d'état combiné (63) au circuit de commande de commutateur (25).

7. Système de batterie (100), comprenant :
une pile d'éléments de batterie (150) configurée pour fournir une première tension de fonctionnement à un premier noeud de sortie (111) ;
un commutateur de puissance (13) configuré pour déconnecter sélectivement la pile d'éléments de batterie (150) du premier noeud de sortie (111) ;
un convertisseur CC-CC (80) configuré pour recevoir la première tension de fonctionnement comme tension d'entrée et pour délivrer en sortie une deuxième tension de fonctionnement à un deuxième noeud de sortie (112) ;
une unité de commande (20) selon l'une quelconque des revendications 1 à 6 ; et
une ligne de données (70) connectée à la première interface de communication (23) de l'unité de commande (20) et à une deuxième interface de communication (83) du convertisseur CC-CC (80),
dans lequel le convertisseur CC-CC (80) est configuré pour transmettre un deuxième signal d'état (53) indiquant un état de fonctionnement d'un deuxième microcontrôleur (84) du convertisseur CC-CC (80) via la deuxième interface de communication (83).

8. Système de batterie (100) selon la revendication 7, dans lequel dans un premier mode de fonctionnement du système de batterie (100), le commutateur de puissance (13) est commandé par le premier microcontrôleur (24) et le convertisseur CC-CC (80) est commandé par le deuxième microcontrôleur (84), et dans lequel dans un deuxième mode de fonctionnement du système de batterie (100), le commutateur de puissance (13) est commandé par le circuit de commande de commutateur (25) et le convertisseur CC-CC (80) est commandé par le premier microcontrôleur (24) via la ligne de données (70).

9. Système de batterie (100) selon la revendication 7 ou 8, dans lequel le premier mode de fonctionnement est transféré vers le deuxième mode de fonctionnement si le deuxième signal d'état (53) indiquant un dysfonctionnement du deuxième microcontrôleur (84) est transmis à l'unité de commande (20) via la ligne de données (70).

10. Système de batterie (100) selon l'une quelconque des revendications 7 à 9, dans lequel le commutateur de puissance (13) est interconnecté entre la pile d'éléments de batterie (150) et le convertisseur CC-CC (80).

11. Système de batterie (100) selon l'une quelconque des revendications 7 à 10, dans lequel l'unité de commande (20) est formée sur un premier support de circuit (27), le convertisseur CC-CC (80) est formé sur un deuxième support de circuit (87) et la ligne de données (70) fournit une connexion de données entre le premier support de circuit (27) et le deuxième support de circuit (87).

12. Système de batterie (100) selon l'une quelconque des revendications 7 à 11, dans lequel le convertisseur CC-CC (80) comprend
au moins un convertisseur CC-CC monophasé (81) configuré pour recevoir une première tension de fonctionnement fournie par une pile d'éléments de batterie (150) du système de batterie (100) et pour délivrer en sortie une deuxième tension de fonctionnement ;
un deuxième microcontrôleur (84) configuré pour faire fonctionner l'au moins un convertisseur CC-CC monophasé (81) ; et
une deuxième interface de communication (83) configurée pour envoyer un deuxième signal d'état (53) indiquant un état de fonctionnement d'un deuxième microcontrôleur (84).

13. Système de batterie (100) selon la revendication 12, dans lequel le convertisseur CC-CC (80) est en outre configuré pour recevoir un premier signal de commande CC-CC (45) via la deuxième interface de communication (83) et pour faire fonctionner au moins un convertisseur CC-CC monophasé (81) sur la base du premier signal de commande CC-CC (45).

14. Système de batterie (100) selon la revendication 12 ou 13, dans lequel au moins un convertisseur CC-CC monophasé (81) comprend au moins deux éléments de commutation et dans lequel le fonctionnement du convertisseur CC-CC monophasé (81) comprend le réglage des rapports cycliques des au moins deux éléments de commutation.

15. Système de batterie (100) selon l'une des revendications 12 à 14, dans lequel le convertisseur CC-CC (80) comprend en outre une puce de base de système (86) configurée pour détecter un dysfonctionnement du deuxième microcontrôleur (84) et pour transmettre le deuxième signal d'état (53) via la deuxième interface de communication (83).
